# EUROPEAN PATENT APPLICATION

(11) **EP 4 725 754 A1**
(43) Date of publication of application: **15.04.2026**
(21) Application number: 25200991.5
(22) Date of filing: 09.09.2025
(51) Int. Cl.: B60L 53/65, B60L 53/66

(54) **AUTHENTICATION SYSTEM, VEHICLE, AND TERMINAL**

(30) Priority: 09.10.2024 JP 2024177253
(71) Applicant: TOYOTA JIDOSHA KABUSHIKI KAISHA, Toyota-shi, Aichi-ken 471-8571 (JP)
(72) Inventor: MISAWA, Takahiro, Toyota-shi, 471-8571 (JP); UEKI, Takahiro, 150-8554 Shibuya-ku (JP)
(74) Representative: D Young & Co LLP

(57) **Abstract**

A server performs processing including the steps of transmitting certificate information (S102) when determining that acquisition of a certificate is requested (YES in S100), transmitting download progress information (S106) when determining that a request source is a terminal (YES in S104), transmitting writing progress information (S110) when determining that download is complete (YES in S108), and notifying a result (S114) when determining that writing is complete (YES in S112).

## Description

### CROSS REFERENCE TO RELATED APPLICATIONS

This nonprovisional application is based on Japanese Patent Application No. 2024-177253 filed on October 9, 2024 with the Japan Patent Office, the entire contents of which are hereby incorporated by reference.

### BACKGROUND

### Field

The present disclosure relates to an authentication system.

### Description of the Background Art

Japanese National Patent Publication No. 2022-527902 discloses a charging station that verifies a vehicle digital signature received from a vehicle using a vehicle public key and enables power supply to the vehicle in response to a successful verification.

### SUMMARY

Information about the vehicle digital signature or the like described above is stored in a controller of the vehicle via a communication network. However, such information has an expiration period and is written to the controller of the vehicle each time, and thus, if the user is notified each time the writing progress changes, the user will frequently receive such a notification. Consequently, an unnecessary notification may be provided to the user.

An object of the present disclosure is to provide an authentication system, a vehicle, and a terminal that suppress unnecessary notifications to a user.

An authentication system according to an aspect of the present disclosure includes a server that transmits certificate information about a digital certificate used in a process for authentication in use of a power stand that performs power transmission between a power storage device mounted in an electrically powered vehicle and the power stand, and a vehicle including a storage device that stores the certificate information received from the server. The server switches whether to provide a notification about writing of the certificate information during writing of the certificate information to the storage device, depending on a request source of the transmission of the certificate information to the vehicle.

Thus, whether to provide a notification about writing of certificate information during writing of the certificate information to the storage device can be switched depending on the request source of transmission of the certificate information to the vehicle, thereby suppressing unnecessary notifications provided to the user or providing a notification requested by the user.

In an embodiment, the authentication system further includes a terminal to which the notification is to be transmitted. The server provides the notification to the terminal when being requested from the terminal to transmit the certificate information to the vehicle.

Thus, when the transmission of the certificate information to the vehicle is requested from the terminal, writing of the certificate information is performed in response to a user's instruction, and accordingly, a notification requested by the user can be provided by providing a notification about writing of the certificate information to the terminal during writing of the certificate information to the storage device.

In still another embodiment, the server does not provide the notification to the terminal when being requested from the vehicle to transmit the certificate information to the vehicle.

Thus, when transmission of the certificate information to the vehicle is requested from the vehicle, since writing of the certificate information is not performed in response to a user's instruction, unnecessary notifications provided to the user can be suppressed by providing no notification about writing of the certificate information to the terminal.

In still another embodiment, the notification about writing of the certificate information includes information indicating a progress status of writing of the certificate information.

Thus, when a notification is provided, the user can be caused to recognize the progress status of writing of the certificate information.

A vehicle according to another aspect of the present disclosure includes a power storage device, a storage device that stores certificate information about a digital certificate used in a process for authentication in use of a power stand that performs power transmission between the power storage device and the power stand, a communication device configured to communicate with a terminal and a server that is a transmission source of the digital certificate, and a controller that writes the certificate information to the storage device upon receipt of the certificate information from the server. When the server is requested to transmit the certificate information by the terminal, the controller is provided, by the terminal, with a notification about writing of the certificate information during writing of the certificate information to the storage device, and when the server is requested to transmit the certificate information via the communication device, the controller is not provided with the notification during writing of the certificate information to the storage device.

A terminal according to still another aspect of the present disclosure includes a communication device configured to communicate with a server and a vehicle, and a display device that displays predetermined information. The vehicle includes a power storage device, and a storage device that stores certificate information about a digital certificate used in a process for authentication in use of a power stand that performs power transmission between the power storage device and the power stand. The terminal further includes a controller that, when requesting the server to transmit the certificate information via the communication device, displays, on the display device, information about writing of the certificate information received from the server during writing of the certificate information to the storage device. The controller does not display the information about writing of the certificate information on the display device when the server is requested from the vehicle to write the certificate information.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows an example overall configuration of an authentication system according to the present embodiment.
Fig. 2 is a sequence diagram showing an example charging process among a vehicle, a power stand, and a server.
Fig. 3 is a flowchart showing example processing performed by the server.
Fig. 4 is a sequence diagram showing an example operation of the authentication system according to the present embodiment.
Fig. 5 is a sequence diagram showing another example operation of the authentication system according to the present embodiment.

### DESCRIPTION OF THE PREFERRED EMBODIMENTS

An embodiment of the present disclosure will be described below in detail with reference to the drawings. In the drawings, the same or corresponding components have the same reference characters allotted, and description thereof will not be repeated.

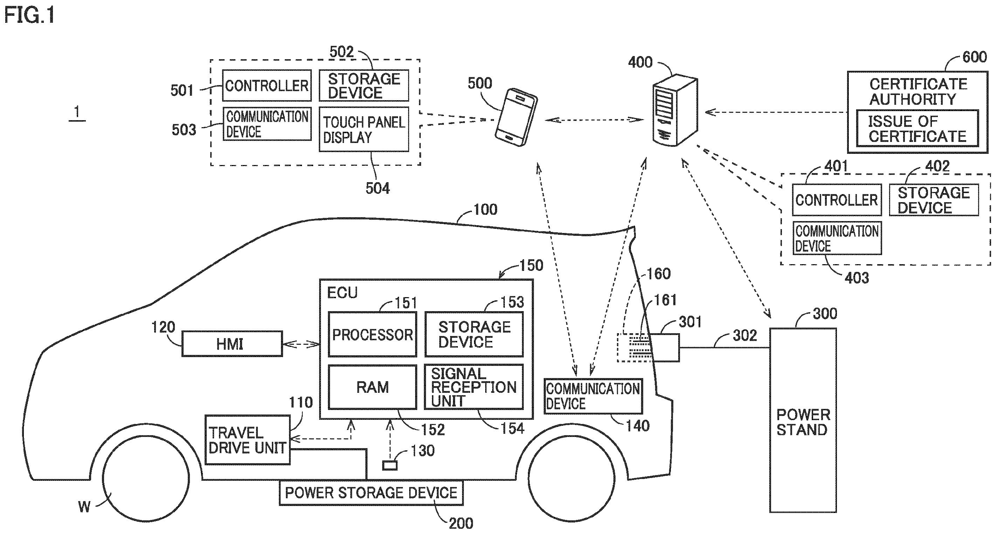

Fig. 1 shows an example overall configuration of an authentication system 1 according to the present embodiment. Authentication system 1 includes a vehicle 100, a power stand 300, a server 400, a terminal 500, and a certificate authority 600.

Vehicle 100 will be described as a battery electric vehicle (BEV) without an engine by way of example, but vehicle 100 is only required to be any electrically powered vehicle driven by an electric motor and may be a hybrid electric vehicle (HEV) with an engine or a plug-in hybrid electric vehicle (PHEV). Vehicle 100 includes a power storage device 200 that stores electric power for traveling. Vehicle 100 is configured to travel by supplying the electric power stored in power storage device 200 to the electric motor (rotating electric machine).

Power stand 300 is configured to enable power transmission between power storage device 200 mounted in vehicle 100 and power stand 300. Specifically, power stand 300 is configured to charge power storage device 200 by means of a plug and charge (PnC) charging method. The PnC charging method refers to a charging method of automatically performing processes such as billing authentication and charging for use of power stand 300 simply by connecting a connector 301 of power stand 300 to an inlet 160 of vehicle 100.

Server 400 includes a controller 401, a storage device 402, and a communication device 403. Controller 401 is configured of a processor such as a central processing unit (CPU) and executes a program stored in storage device 402 including random access memory (RAM). Communication device 403 is configured to communicate with a communication device 140 of vehicle 100 and a communication device 503 of terminal 500 via a communication network (not shown).

Server 400 stores information about vehicle 100, information about terminal 500, and information about the user. Server 400 stores, for example, a digital certificate for using power stand 300 in vehicle 100. The digital certificate is, for example, an electronic certificate including public key information or the like. The digital certificate includes, for example, a root certificate, an original equipment manufacturer (OEM) certificate, or a charging contract certificate. The root certificate is used in processes for authentication during TLS communication with power stand 300. The charging contract certificate authenticates the contract of a vehicle and is used particularly in a process for authentication in use of power stand 300 among the authentication processes. The OEM certificate is used in server 400 for encrypting the charging contract certificate, is installed also in vehicle 100, and is used in the processes for authentication. The charging contract certificate certifies the contents of the contract concluded between a mobility operator (MO) providing a charging service and a user of vehicle 100. The present embodiment will describe, by way of example, a case where the digital certificate is the charging contract certificate.

Certificate authority 600 includes a server belonging to a certificate organization and issues a digital certificate when accepting an application or the like as, for example, an expiration period of an existing digital certificate has elapsed or a new contract has been concluded. Certificate authority 600 transmits the issued digital certificate to server 400.

Vehicle 100 includes a monitoring module 130 and a controller (electronic control unit: ECU) 150.

Monitoring module 130 includes various sensors that detect the state (e.g., voltage, current, and temperature) of power storage device 200 and outputs a detection result to ECU 150. Monitoring module 130 may be a battery management system (BMS) that further has a state of charge (SOC) estimation function, a state of health (SOH) estimation function, a cell voltage equalization function, a diagnostic function, and a communication function, in addition to the sensor functions described above. ECU 150 can obtain the state (e.g., temperature, current, voltage, SOC, and internal resistance) of power storage device 200 based on the output from monitoring module 130. Power storage device 200 is charged (external charging) or discharged (external power feeding) by exchanging electric power with power stand 300.

ECU 150 is configured to perform charging control and discharging control of power storage device 200. ECU 150 includes a processor 151 configured of a CPU or the like, a RAM 152, a storage device 153, and a signal reception unit 154.

RAM 152 functions as a working memory for temporarily storing data processed by processor 151.

Storage device 153 is configured to retain the stored information. Storage device 153 stores a program, as well as information used in the program (e.g., maps, formulas, and various parameters). As processor 151 executes the program stored in storage device 153, various types of control in ECU 150 are performed. Storage device 153 further stores the digital certificate described above. An expiration period is set in the digital certificate. ECU 150 controls charging authenticated by the digital certificate. If the expiration period of the digital certificate has elapsed, the new digital certificate is downloaded, and the expired digital certificate is updated to (replaced with) the downloaded digital certificate.

Signal reception unit 154 receives a predetermined signal from any device other than ECU 150 mounted in vehicle 100. Signal reception unit 154 receives a predetermined signal (information) from, for example, a human machine interface (HMI) device 120 or communication device 140, which will be described later.

Vehicle 100 further includes a travel drive unit 110, HMI device 120, communication device 140, inlet 160, and drive wheels W.

Travel drive unit 110 is configured to cause vehicle 100 to travel using the electric power stored in power storage device 200. Travel drive unit 110 includes, for example, an unshown power control unit (PCU) configured of an inverter, a converter, a relay, and the like, an unshown motor generator (MG) including a three-phase alternating-current (AC) rotary motor, and an unshown system main relay (SMR) that switches the connection/disconnection state of the power path between power storage device 200 and the PCU.

The PCU and the SMR are controlled by ECU 150. The MG is driven by the PCU and is configured to rotate drive wheels W. The PCU drives the MG using the electric power supplied from power storage device 200. Additionally, the MG is configured to perform regenerative power generation and supply the generated electric power to power storage device 200. The SMR is rendered closed (connected) during travel of vehicle 100.

Power storage device 200 is configured of a secondary battery such as a nickel metal hydride battery or a lithium-ion battery having a liquid electrolyte or a solid electrolyte. Power storage device 200 may be configured of, for example, a capacitor or the like instead of the secondary battery.

HMI device 120 includes an input device that receives input of a user's operation and a display device that displays information to the user. HMI device 120 may include a touch panel display. HMI device 120 displays information on the display device in response to a control signal from ECU 150.

Communication device 140 is configured to communicate with, for example, terminal 500 (e.g., smartphone) used by the user of vehicle 100 and server 400. Communication device 140 may include, for example, a communication interface (I/F) such as a data communication module (DCM) compatible with a predetermined communication format such as the fifth generation (5G) mobile communication system.

Inlet 160 is configured to allow connector 301 of power stand 300 to be inserted thereinto. Connector 301 is provided at the tip of a cable 302 attached to power stand 300. Vehicle 100 is electrically connected to power stand 300 as connector 301 is inserted into inlet 160. This enables power to be transmitted and received (charging or power feeding) between power stand 300 and vehicle 100.

Terminal 500 includes a controller 501, a storage device 502, communication device 503, and a touch panel display 504. Controller 501 is configured of a processor such as a CPU and executes a program stored in storage device 502 including RAM or the like. Communication device 503 is configured to communicate with communication device 140 of vehicle 100 and communication device 403 of server 400. Touch panel display 504 includes an input device that receives input of a user's operation and a display device that displays information to the user. Terminal 500 is a terminal of the user of vehicle 100. Terminal 500, vehicle 100, and the user are stored in server 400 in correspondence with one another. Specifically, server 400 stores, for example, identification information identifying a user, identification information identifying vehicle 100, and identification information identifying terminal 500 in association with one another. Further, server 400 stores, in storage device 402, information about the digital certificate stored in vehicle 100 in association with these pieces of identification information.

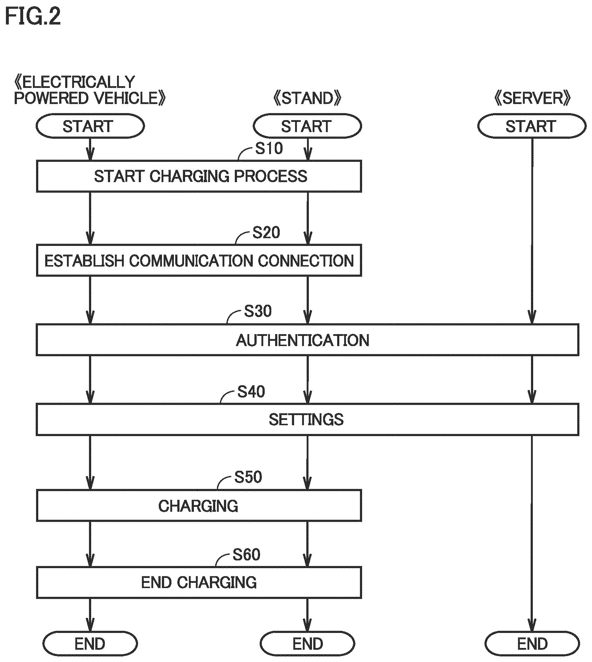

Fig. 2 is a sequence diagram showing an example charging process among vehicle 100, power stand 300, and server 400.

In step (hereinafter step will be referred to as S) 10, a charging process between vehicle 100 and power stand 300 is started. For example, the charging process is started when connector 301 is connected to inlet 160.

In S20, a secure communication connection is established between vehicle 100 and power stand 300.

In step S30, various types of authentication are performed between vehicle 100 and power stand 300 using a digital certificate stored in vehicle 100. For example, pieces of processing such as identification, authentication, and authorization are performed.

In S40, settings are performed. For example, a target setting, a charge scheduling setting, and any other setting are performed.

In S50, charging between vehicle 100 and power stand 300 is performed. In S60, charging is terminated.

The expiration period is set in the digital certificate used in the above charging process, as described above. Thus, the digital certificate is updated as the expiration period of the digital certificate has elapsed. The digital certificate is updated by replacing the data on the existing digital certificate stored in storage device 153 of vehicle 100 with data on a new digital certificate downloaded from server 400. In this case, for example, a notification of update information about the digital certificate (information indicating that a new digital certificate is available) is provided from server 400 to vehicle 100 or terminal 500. In response to such a notification, terminal 500, upon receipt of input of a user's operation, requests acquisition of the new digital certificate from server 400, or vehicle 100 requests acquisition of the new digital certificate from server 400. Server 400 transmits data on the digital certificate to vehicle 100 in response to such a request, and vehicle 100 stores the received data on the digital certificate in storage device 153. The user may be notified of the progress status of the acquisition of the digital certificate in real time.

However, if the user is notified of the progress status of acquisition of the digital certificate in real time, the user will frequently receive such a notification. Thus, for example, when the digital certificate is obtained without the user's initiative, the user will be provided with unnecessary notifications due to, for example, frequent notifications.

In the present embodiment, thus, server 400 switches whether to provide a notification about writing of certificate information including information about a digital certificate to the storage device 153 of vehicle 100, depending on the request source of the transmission of certificate information to vehicle 100.

Thus, unnecessary notifications provided to the user can be suppressed, or a notification requested by the user can be provided.

More specifically, server 400 notifies terminal 500 about writing of certificate information when the transmission of certificate information to vehicle 100 is requested from terminal 500. Consequently, a notification requested by the user can be provided. Further, server 400 does not provide a notification to terminal 500 when the transmission of certificate information to vehicle 100 is requested from vehicle 100. As a result, when the transmission of certificate information to vehicle 100 is requested from vehicle 100, writing of the digital certificate is performed without the user's initiative, and thus, unnecessary notifications provided to the user can be suppressed by transmitting no notification to terminal 500.

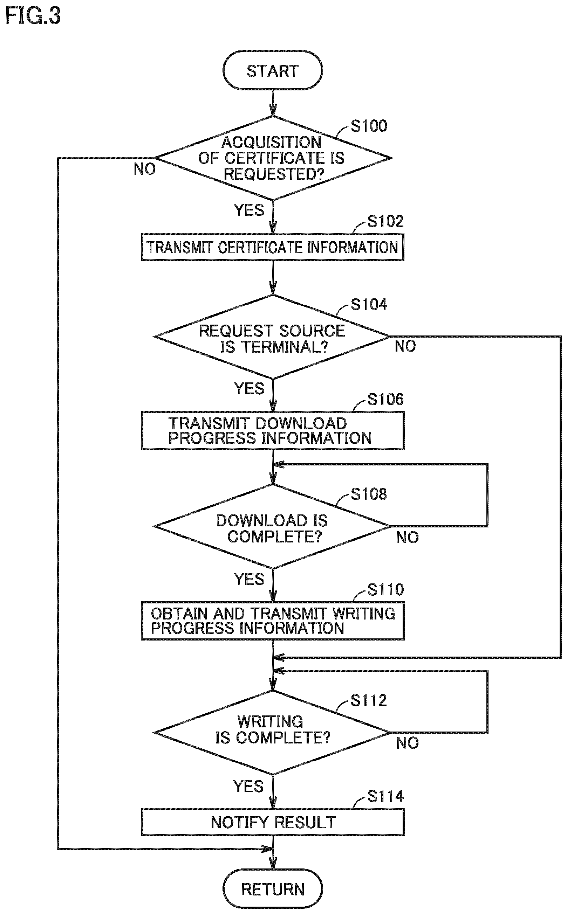

Referring to Fig. 3, example processing performed by server 400 (specifically, controller 401) will be described below. Fig. 3 is a flowchart showing example processing performed by server 400. A series of steps of processing shown in this flowchart are repeatedly performed at predetermined intervals.

In S 100, server 400 determines whether acquisition of a digital certificate is requested. Server 400 determines that acquisition of a digital certificate is requested when, for example, receiving, from at least any of vehicle 100 and terminal 500, a request signal requesting transmission of a digital certificate to vehicle 100.

Server 400 transmits, to vehicle 100 and terminal 500 associated with vehicle 100, certificate information indicating that a new digital certificate is available when the new digital certificate is issued by certificate authority 600, for example, as the expiration period of the digital certificate managed by server 400 has elapsed. When the user, for example, performs an operation to obtain the digital certificate of vehicle 100 upon receipt of a notification that certificate information has been received in terminal 500, a request signal is transmitted from terminal 500 to server 400. Alternatively, when vehicle 100 receives a notification that certificate information has been received, a request signal is transmitted from vehicle 100 to server 400. When server 400 determines that acquisition of a digital certificate is requested (YES in S100), the processing proceeds to S102.

In S102, server 400 transmits data (certificate information) on the digital certificate to vehicle 100. The processing then proceeds to S104.

In S104, server 400 determines whether the request source of the acquisition request is terminal 500. When server 400 determines that the request source of the acquisition request is terminal 500 (YES in S104), the processing proceeds to S106.

In S106, server 400 transmits, to terminal 500, progress information about download of data on the digital certificate to vehicle 100. Terminal 500 displays, on touch panel display 504, information (text information indicating a ratio on a percentage basis or image information such as a bar graph) about the ratio of the downloaded data amount to the total data amount of a new digital certificate to be downloaded to vehicle 100, using the received progress information. Terminal 500 may display, on touch panel display 504, information about the ratio of the data amount yet to be downloaded to the total data amount, instead of the information about the ratio of the downloaded data amount to the total amount of data, of a new digital certificate, or may display, on touch panel display 504, information about the time required for the completion of download, using a transfer speed. The processing then proceeds to S108.

In S108, server 400 determines whether the download is complete. Server 400 may determine that the download is complete when, for example, the data amount of a digital certificate transmitted to vehicle 100 is equal to the total data amount. When server 400 determines that the download is complete (YES in S108), the processing proceeds to S110.

In S110, server 400 obtains, from vehicle 100, progress information about writing of data of the digital certificate to storage device 153 in vehicle 100 and transmits the obtained progress information to terminal 500. Terminal 500 displays, on touch panel display 504, information (text information indicating a ratio on a percentage basis or image information such as a bar or a graph) about the ratio of the written data amount to the total data amount of the new digital certificate written to storage device 153, using the received progress information about writing. Terminal 500 may display, on touch panel display 504, information about the ratio of the data amount yet to be written to the total amount of data, instead of information about the ratio of the written data amount to the total data amount, of a new digital certificate, or may display, on touch panel display 504, information about the time required for the completion of download, using a transfer speed. The processing then proceeds to S112.

In S112, server 400 determines whether writing is complete. Server 400 may determine that writing is complete when, for example, receiving information indicating that writing is complete from vehicle 100. When server 400 determines that writing is complete (YES in S112), the processing then proceeds to S114.

In S114, server 400 transmits result information indicating that writing is complete to terminal 500 to notify the result. When server 400 determines that writing of a certificate is not requested (NO in S100), this processing ends. When server 400 determines that the request source of the certificate write request is not terminal 500 (NO in S104), the processing proceeds to S112. When server 400 determines that writing is not complete (NO in S108), the processing returns to S108. When server 400 determines that writing is not complete (NO in S112), the processing returns to S112.

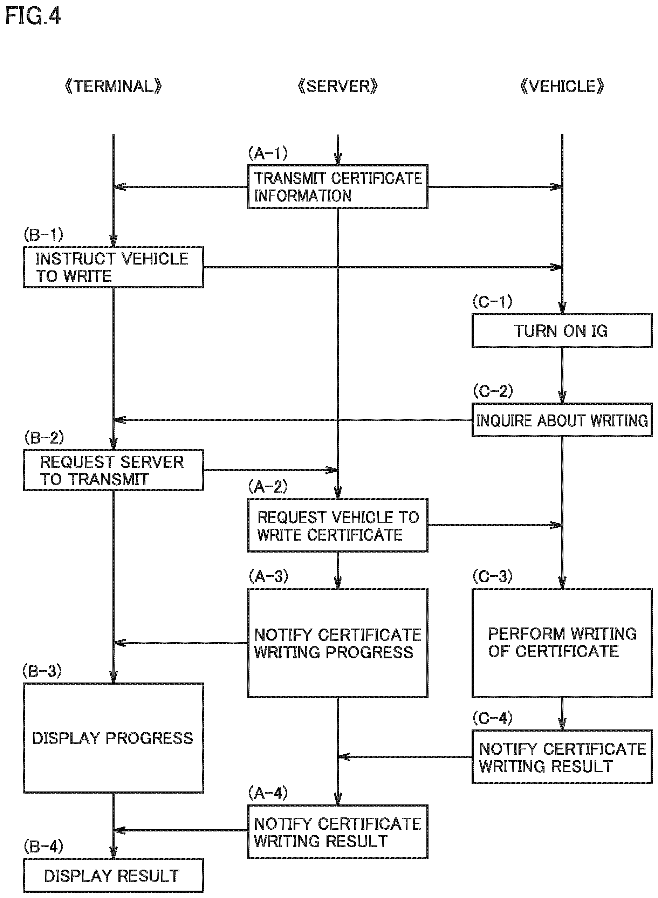

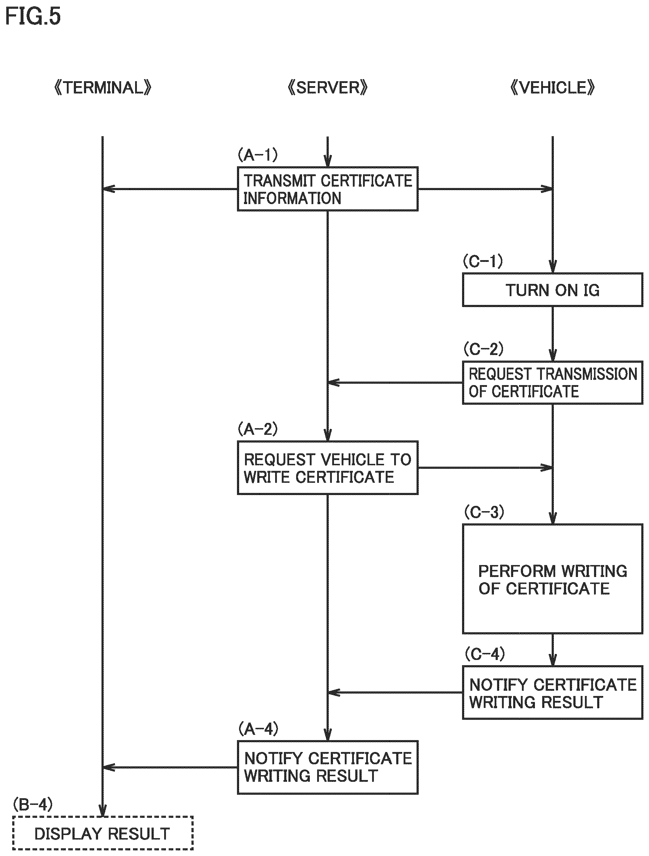

An example operation of authentication system 1 based on the above configuration and flowchart will be described with reference to Figs. 4 and 5. Fig. 4 is a sequence diagram showing an example operation of authentication system 1 according to the present embodiment.

As shown in (A-1) of Fig. 4, when obtaining a new digital certificate issued by certificate authority 600, for example, upon lapse of the expiration period of the digital certificate managed by server 400, server 400 transmits, to each of vehicle 100 and terminal 500, certificate information indicating that the new digital certificate is available. In terminal 500, guidance (notification) of acquisition of a new digital certificate in vehicle 100 is performed using, for example, an application or the like.

As shown in (B-1) of Fig. 4, when the user wishes to obtain a new digital certificate in response to the notification provided to the application of terminal 500, an operation to instruct vehicle 100 to perform writing is performed, and a write instruction is transmitted to vehicle 100.

When the ignition (IG) is turned on in vehicle 100 in response to a user's operation, a remote operation, or any other operation as shown in (C-1) of Fig. 4, the execution of writing of the digital certificate is enabled. Thus, when having received the write instruction from terminal 500, vehicle 100 inquires of terminal 500 whether to perform writing.

As shown in (B-2) of Fig. 4, when the user performs an operation to perform writing in terminal 500, server 400 is requested to perform transmission to server 100. When acquisition of a certificate is requested (YES in S100), data on a new digital certificate is transmitted to vehicle 100 (S102).

Since the request source is terminal 500 (YES in S104), download progress information is transmitted from server 400 to terminal 500 (S106). When download to vehicle 100 is complete (YES in S108), as shown in (A-2) of Fig. 4, wiring of data on the new digital certificate is requested.

As shown in (C-3) of Fig. 4, writing of data on the new digital certificate is performed in vehicle 100 in response to the request from server 400.

As shown in (A-3) of Fig. 4, server 400 obtains writing progress information from vehicle 100, for example, each time a predetermined period has elapsed, and transmits the writing progress information to terminal 500 (S110).

Thus, as shown in (B-3) of Fig. 4, terminal 500 displays the received progress information on touch panel display 504. As shown in (C-4) of Fig. 4, when writing of the digital certificate is complete, a notification (result notification) indicating the completion is transmitted to server 400. As shown in (A-4) of Fig. 4, upon receipt of the result notification, server 400 determines that writing is complete (YES in S112) and transmits the result information to terminal 500 (S114). As shown in (B-4) of Fig. 4, terminal 500 displays the received result information on touch panel display 504.

Fig. 5 is a sequence diagram showing another example operation of authentication system 1 according to the present embodiment.

As shown in (A-1) of Fig. 5, when obtaining a new digital certificate issued by certificate authority 600, for example, upon lapse of the expiration period of the digital certificate managed by server 400, server 400 transmits, to each of vehicle 100 and terminal 500, certificate information indicating that the new digital certificate is available.

When the IG is turned on in vehicle 100 in response to a user's operation, a remote operation, or any other operation as shown in (C-1) of Fig. 5, server 400 is requested to perform transmission to vehicle 100, as shown in (C-2) of Fig. 5, when having received no write instruction from terminal 500. When acquisition of a certificate is requested (YES in S100), the data on the new digital certificate is transmitted to vehicle 100 (S102).

Since the request source is vehicle 100 (NO in S104), the progress information about download of the digital certificate is not transmitted from server 400 to terminal 500, and the progressing continues. When the download of data on the digital certificate is complete in vehicle 100, information indicating the completion is transmitted to server 400. At this time, as shown in (A-2) of Fig. 5, writing of data on the new digital certificate is requested.

As shown in (C-3) of Fig. 5, writing of data on the new digital certificate is performed in vehicle 100 in response to the request from server 400.

As shown in (C-4) of Fig. 5, when writing of the digital certificate is complete, a notification (result notification) indicating the completion is transmitted to server 400. As shown in Fig. 5 (A-4), upon receipt of the result notification, server 400 determines that writing is complete (YES in S112) and transmits result information to terminal 500 (S114). At this time, as shown in (B-4) of Fig. 5, the result may be or may not be displayed on touch panel display 504 of terminal 500.

As described above, according to authentication system 1 of the present embodiment, when the transmission of certificate information to vehicle 100 is requested from terminal 500, a notification about writing of the certificate information can be provided to terminal 500, thereby providing a notification requested by the user. Further, when the transmission of certificate information to vehicle 100 is requested from vehicle 100, no notification is provided to terminal 500. When the transmission of certificate information to vehicle 100 is requested from vehicle 100, writing of a digital certificate is performed without the user's initiative, and thus, unnecessary notifications provided to the user can be suppressed by providing no notification to terminal 500. Thus, an authentication system, a vehicle, and a terminal that suppress unnecessary notifications to the user can be provided.

Modifications will be described below.

The embodiment has described that the IG is turned on in vehicle 100 remotely or in response to a user's operation, but the IG may be turned on in vehicle 100 when, for example, whether to turn on the IG is inquired at the terminal and then user's permission is obtained.

Further, the embodiment has described that progress information is not displayed on terminal 500 when the request source of writing is vehicle 100, but in this case, progress information may not be displayed also on HMI device 120 of vehicle 100.

Further, the embodiment has described that writing is performed after the completion of download of data on a new digital certificate, but download and writing of data may be performed in parallel.

The modifications described above may be implemented as appropriate in whole or in part in any combination.

Although the embodiment of the present disclosure has been described, it should be understood that the present embodiment disclosed herein is illustrative and non-restrictive in every respect. The scope of the present disclosure is defined by the terms of the claims and is intended to include any modifications within the scope and meaning equivalent to the terms of the claims.

## Claims

1. An authentication system comprising:
a server (400) that transmits certificate information about a digital certificate used in a process for authentication in use of a power stand (300) that performs power transmission between a power storage device (200) mounted in an electrically powered vehicle (100) and the power stand (300); and
a vehicle (100) including a storage device (153) that stores the certificate information received from the server (400),
wherein the server (400) switches whether to provide a notification about writing of the certificate information during writing of the certificate information to the storage device (153), depending on a request source of transmission of the certificate information to the vehicle (100).

2. The authentication system according to claim 1, wherein
the authentication system (1) further includes a terminal (500) to which the notification is to be transmitted, and
the server (400) provides the notification to the terminal (500) when being requested from the terminal (500) to transmit the certificate information to the vehicle (100).

3. The authentication system according to claim 2, wherein the server (400) does not provide the notification to the terminal (500) when being requested from the vehicle (100) to transmit the certificate information to the vehicle (100).

4. The authentication system according to claim 1, wherein the notification about writing of the certificate information includes information indicating a progress status of writing of the certificate information.

5. A vehicle comprising:
a power storage device (200);
a storage device (153) that stores certificate information about a digital certificate used in a process for authentication in use of a power stand (300) that performs power transmission between the power storage device (200) and the power stand (300);
a communication device (140) configured to communicate with a terminal (500) and a server (400) that is a transmission source of the digital certificate; and
a controller (151) that writes the certificate information to the storage device (153) upon receipt of the certificate information from the server (400), wherein
when the server (400) is requested to transmit the certificate information by the terminal (500), the controller (151) is provided, by the terminal (500), with a notification about writing of the certificate information during writing of the certificate information to the storage device (153), and
when the server (400) is requested to transmit the certificate information via the communication device (140), the controller (151) is not provided with the notification during writing of the certificate information to the storage device (153).

6. A terminal comprising:
a communication device (503) configured to communicate with a server (400) and a vehicle (100); and
a display device (504) that displays predetermined information, wherein
the vehicle (100) includes
a power storage device (200), and
a storage device (153) that stores certificate information about a digital certificate used in a process for authentication in use of a power stand (300) that performs power transmission between the power storage device (200) and the power stand (300),
the terminal further comprises a controller (501) that, when requesting the server (400) to transmit the certificate information via the communication device (503), displays, on the display device (504), information about writing of the certificate information received from the server (400) during writing of the certificate information to the storage device (153), and
the controller (501) does not display the information about writing of the certificate information on the display device (504) when the server (400) is requested from the vehicle (100) to write the certificate information.
